# EUROPÄISCHE PATENTSCHRIFT

(11) **EP 3 217 497 B1**
(45) Veröffentlichungstag und Bekanntmachung des Hinweises auf die Patenterteilung: **23.11.2022**
(21) Anmeldenummer: 16159269.6
(22) Anmeldetag: 08.03.2016
(51) Int. Cl.: H02G 3/10, H02G 3/34, H02G 3/08, H02G 3/06, E04F 19/04

(54) **GERÄTETRÄGER**
DEVICE HOLDER
SUPPORT D'APPAREIL

(43) Veröffentlichungstag der Anmeldung: 13.09.2017
(73) Patentinhaber: GGK GmbH & Co. KG, 35753 Greifenstein (DE)
(72) Erfinder: MÜLLER, Eckhard, 35781 Weilburg (DE)
(74) Vertreter: advotec.

(56) Entgegenhaltungen:
- EP-A1- 0 929 138
- EP-A1- 1 005 127
- EP-A1- 1 326 315
- EP-A1- 1 571 744
- FR-A1- 2 786 617
- GB-A- 2 329 533
- NL-C2- 1 016 989

## Beschreibung

Die vorliegende Erfindung betrifft einen Geräteträger für die Montage von Elektroinstallationsgeräten neben insbesondere als Sockelleistenkanal ausgeführten Leitungsführungskanälen mit einer Trägerbasis zur Aufnahme zumindest eines Elektroinstallationsgerätes, einem Trägergehäuse zur Aufnahme der Trägerbasis und einem Kanaladapter zum Anschluss des Gehäuses an den Leitungsführungskanal, wobei der Kanaladapter unabhängig vom Trägergehäuse ausgebildet ist, und wobei das Trägergehäuse an einer Anschlussseite zum Anschluss an den Kanaladapter in einer Gehäusewand eine Ausnehmung zur Aufnahme eines an einer Anschlussseite des Kanaladapters ausgebildeten Anschlusseinrichtung aufweist, wobei sowohl eine Längsseite als auch eine Querseite des Trägergehäuses als Anschlussseite ausgebildet sind, die jeweils einen in der Ausnehmung der Gehäusewand angeordneten Gehäusewandeinsatz aufweisen.

Geräteträger der eingangs genannten Art dienen insbesondere zur Anbringung von Steckdosen und Schaltern an Leitungsführungskanälen, die zur Aufwandinstallation elektrischer Leitungen dienen. Eine derartige Aufwandinstallation, die regelmäßig in Bestandsgebäuden zur Kabelinstallation und Spannungsversorgung von nachträglich installierten elektrischen Verbrauchern benötigt werden, werden häufig als sogenannte Sockelleistenkanäle ausgeführt, die in Doppelfunktion neben einer eingehäusten Anordnung der Versorgungskabel die gleichzeitige Ausbildung von Fußleisten oder Sockelleisten ermöglichen.

Der nachträglichen Installation von Spannungsversorgungskabeln in Bestandsgebäuden kommt zunehmende Bedeutung zu, da der Elektrisierungsgrad bzw. die Ausstattung von Wohngebäuden mit elektrischen Aktuatoren ständig zunimmt, insbesondere in Kombination mit einer externen berührungslosen Ansteuerung der Geräte, die unter dem Begriff "Smarthome" für die Ansteuerung der Geräte via auf Smartphones herunter geladene Apps propagiert wird.

Ein Geräteträger der eingangs genannten Art, der eine Wandinstallation neben einem Sockelleistenkanal ermöglicht, ist beispielsweise aus der DE 20 2004 013 181 U1 bekannt. Zur Verbindung des Geräteträgers mit dem Sockelleistenkanal ist das Trägergehäuse des Geräteträgers so ausgebildet, dass es gleichzeitig eine Trägerbasis mit den darin angeordneten Elektroinstallationsgeräten als auch einen an den Geräteträger angrenzenden Teil des Sockelleistenkanals überdeckt. Der bekannte Geräteträger weist ein Trägergehäuse mit einer konvexen Frontseite auf, die sich mit ihrem dem Sockelleistenkanal abdeckenden Teil über eine auf einer Kanalbasis angeordneten Kanalabdeckung erstreckt, die eine plane Frontseite aufweist. Mithin zeigt die DE 20 2004 013 181 U1 eine Kombination eines Geräteträgers mit einem Sockelleistenkanal, bei der die voneinander abweichende äußere Gestaltung des Trägergehäuses und der Kanalabdeckung augenfällig ist. Aus der EP 1 005 127 A1, der EP 0 929 138 A1, der EP 1 571 744 A1, der FR 2 786 617 A1, der EP 1 326 315 und der GB 2 329 533 A sind Geräteträger zur Montage an einem Leitungsführungskanal bekannt.

Der vorliegenden Erfindung liegt die Aufgabe zugrunde, einen Geräteträger vorzuschlagen, der auf besonders einfache Art und Weise eine in ihrer äußeren Ausgestaltung harmonisch erscheinende Kombination des Geräteträgers mit dem vorzugsweise als Sockelleistenkanal ausgeführten Leitungsführungskanal ermöglicht, um mit möglichst geringem Aufwand auch besonderen ästhetischen Ansprüchen gerecht zu werden und insbesondere die Akzeptanz für eine Aufwandinstallation erhöht.

Zur Lösung dieser Aufgabe weist der erfindungsgemäße Geräteträger die Merkmale des Anspruchs 1 auf.

Erfindungsgemäß ist der Kanaladapter unabhängig vom Trägergehäuse ausgebildet, sodass eine Anpassung des Geräteträgers in seinem äußeren Erscheinungsbild an den vorzugsweise als Sockelleistenkanal ausgeführten Leitungsführungskanal allein durch Auswahl eines an die äußere Ausgestaltung des Kabelkanals, also insbesondere die Kanalabdeckung angepassten Kanaladapters möglich ist. Hierdurch ist es möglich, die Kanalabdeckung des Leitungsführungskanals und den Kanaladapter in geeigneter Weise aufeinander abzustimmen, wobei für das Geräteträgergehäuse und eine Kanalbasis des Leitungsführungskanals standardmäßig ausgestaltete Komponenten eingesetzt werden können. Damit wird eine Variabilität in der äußeren Ausgestaltung der die äußere Erscheinung eines Kabelkanalsystems prägenden Bestandteile ermöglicht, die nicht nur eine Anpassung an besondere Architekturstile sondern darüber hinaus auch die Berücksichtigung individueller Vorlieben bei der Innenraumausgestaltung der Bewohner schafft. Im Ergebnis trägt somit die erfindungsgemäße Ausgestaltung des Geräteträgers zu einer wesentlichen Erhöhung der Akzeptanz der nachträglichen Aufwandinstallation von Kabelkanalsystemen in Bestandsgebäuden der unterschiedlichsten Epochen und Architekturstile bei.

In einer besonders bevorzugten Ausführungsform des Geräteträgers bildet der Kanaladapter eine Abdeckung einer zur Wandmontage ausgebildeten Kanalbasis des Leitungsführungskanals, sodass der Kanaladapter selbst in einem unmittelbar an den Geräteträger angrenzenden Bereich die Kanalabdeckung ausbildet und somit quasi Mitbestandteil der Kanalabdeckung des Leitungsführungskanals wird. Hierdurch wird ein besonders hoher Grad einer optischen Integration des Geräteträgers in die Kanalabdeckung des Leitungsführungskanals ermöglicht.

Wenn der Kanaladapter austauschbar mit dem Trägergehäuse verbunden ist, ist nicht nur eine vom Trägergehäuse unabhängige Handhabung des Kanaladapters möglich, sondern eine Handhabung des Trägergehäuses zusammen mit dem Kanaladapter als Montageeinheit, sodass eine separate Ausgestaltung des Kanaladapters im Vergleich zu der aus dem Stand der Technik bekannten in das Trägergehäuse integrierten Ausgestaltung des Kanaladapters keine Erhöhung des Montageaufwands bedingt.

Eine besonders einfache und komfortable Art und Weise der Verbindung zwischen dem Kanaladapter und dem Trägergehäuse wird möglich, wenn der Kanaladapter mittels einer Steckverbindung mit dem Trägergehäuse verbunden ist.

Erfindungsgemäß weist das Trägergehäuse an einer Anschlussseite zum Anschluss an den Kanaladapter in einer Gehäusewand eine Ausnehmung zur Aufnahme eines an einer Anschlussseite des Kanaladapters ausgebildeten Anschlusseinrichtung auf, sodass trotz der vom Trägergehäuse unabhängigen Ausgestaltung des Kanaladapters eine besonders kompakte Verbindung zwischen dem Trägergehäuse und dem Kanaladapter möglich wird, bei der die Anschlusseinrichtung des Kanaladapters quasi einen Wandbestandteil der Gehäusewand des Trägergehäuses ausbildet.

Erfindungsgemäß ist die an der Anschlussseite des Trägergehäuses ausgebildete Ausnehmung mit einem gegen die an der Anschlussseite des Kanaladapters ausgebildete Anschlusseinrichtung austauschbaren Gehäusewandeinsatz versehen, sodass im Bedarfsfall auch eine vom Kanaladapter unabhängige Verwendung des Trägergehäuses möglich ist, bei der die Wandausnehmung durch den Gehäusewandeinsatz verschlossen ist und somit eine die Trägerbasis allseitig umschließende elektrisch sichere Abdeckung von dem Geräteträger aufgenommenen Elektroinstallationsgeräten, also beispielsweise Steckdosen oder Schaltern, möglich ist.

Erfindungsgemäß sind sowohl eine Längsseite als auch eine Querseite des Trägergehäuses als Anschlussseite ausgebildet, die jeweils einen in einer Ausnehmung einer Gehäusewand angeordneten Gehäusewandeinsatz aufweisen, sodass das Trägergehäuse an unterschiedlichen Anschlussseiten in grundsätzlich gleicher Art und Weise mit dem Kanaladapter verbindbar ist. Hierdurch wird etwa bei Trägergehäusen, die ungleich lange Längs- und Querseiten aufweisen, also insbesondere bei rechteckförmig ausgebildeten Trägergehäusen, die in der Regel zur Kombination mit Trägerbasen dienen, die eine Mehrzahl von Elektroinstallationsgeräten in Reihenanordnung aufnehmen, sowohl eine Installation in Vertikalausrichtung als auch in Horizontalausrichtung möglich.

Erfindungsgemäß sind sowohl eine Längsseite als auch eine Querseite der Trägerbasis mit einer über eine Sollbrucheinrichtung mit der Längsseite und der Querseite abtrennbar verbundenen Positionierungshilfe versehen. Diese Positionierungshilfe weist in einem definiertem Abstand von der Längsseite und der Querseite einen Parallelanschlag zur Anlage gegen den Leitungsführungskanal auf, wodurch mittels der Positionierungshilfe wahlweise sowohl bei einer Vertikalausrichtung als auch bei einer Horizontalausrichtung der Trägerbasis eine definierte parallele Ausrichtung der Trägerbasis bei der Wandmontage der Trägerbasis wesentlich vereinfacht werden kann.

Besonders bevorzugt ist es, wenn die Steckverbindung als Eingriffsverbindung ausgebildet ist, derart, dass ein an der Anschlusseinrichtung ausgebildeter Verbindungssteg in eine am Öffnungsrand der Ausnehmung ausgebildete Aufnahmenut eingreift, sodass die Ausbildung einer besonders breiten Verbindungsbasis möglich wird.

Besonders vorteilhaft ist es auch, wenn der Verbindungssteg und die Aufnahmenut eine U-förmige Erstreckung aufweisen, derart, dass ein benachbart einer Frontseite des Trägergehäuses bzw. des Kanaladapters angeordneter und zur Frontseite paralleler Stegabschnitt und Nutabschnitt zusammen einen axialen Anschlag ausbilden, sodass nicht nur über den U-förmigen Verlauf der Eingriffsverbindung zwischen dem Trägergehäuse und dem Kanaladapter eine besonders belastbare Verbindung zwischen dem Trägergehäuse und dem Kanaladapter geschaffen wird, sondern darüber hinaus der parallele Stegabschnitt und der parallele Nutabschnitt einen axialen Anschlag ausbilden, der die Definition einer bündigen Relativanordnung der Frontseiten des Kanaladapters und des Trägergehäuses ermöglicht.

Wie vorstehen erläutert, dient die Trägerbasis zur Anordnung bzw. Aufnahme der Elektroinstallationsgeräte, die nach Anordnung in der Trägerbasis mit dem Trägergehäuse abgedeckt werden. In dem Fall, wenn die Elektroinstallationsgeräte in ihren Abmessungen eine unmittelbare Aufnahme bzw. Befestigung in der Trägerbasis nicht ermöglichen, ist es zur Vereinfachung einer sicheren und einfachen Installation der Elektroinstallationsgeräte in der Trägerbasis vorteilhaft, wenn die Trägerbasis eine Anschlusseinrichtung zum Anschluss eines Montagerahmens aufweist, derart, dass zur Aufnahme des Elektroinstallationsgerätes in der Trägerbasis der Montagerahmen zusammen mit dem Elektroinstallationsgerät als Montageeinheit mit der Anschlusseinrichtung verbindbar ist.

Besonders vorteilhaft ist es, um eine auch hohen ästhetischen Ansprüchen gerecht werdende äußere Erscheinung des Geräteträgers bei Verwendung eines Montagerahmens zur Aufnahme des Elektroinstallationsgerätes in die Trägerbasis zu ermöglichen, wenn der Montagerahmen mit einer Rahmenblende versehen ist, derart, dass ein Öffnungsrand des Trägergehäuses zwischen dem Montagerahmen und der Rahmenblende aufgenommen ist.

Nachfolgend werden bevorzugte Ausführungsformen des Geräteträgers anhand der Zeichnungen näher erläutert. Es zeigen:
- **Fig. 1:**: einen Geräteträger in Vertikalausrichtung an einem Sockelleistenkanal;
- **Fig. 2:**: einen an einem Sockelleistenkanal in Horizontalausrichtung installierten Geräteträger;
- **Fig. 3:**: eine Trägerbasis des in den **Fig. 1** und **2** dargestellten Geräteträgers;
- **Fig. 4:**: einen Montagerahmen des in den **Fig. 1** und **2** dargestellten Geräteträgers;
- **Fig. 5:**: ein Trägergehäuse des in den **Fig. 1** und **2** dargestellten Geräteträgers mit in einer Längsseite und einer Querseite ausgebildeten Ausnehmungen;
- **Fig. 6:**: einen Gehäusewandeinsatz zur Anordnung in einer Ausnehmung des in **Fig. 5** dargestellten Trägergehäuses;
- **Fig. 7:**: einen weiteren Gehäusewandeinsatz zur Anordnung in einer Ausnehmung des in **Fig. 5** dargestellten Trägergehäuses;
- **Fig. 8:**: eine Rahmenblende des in den **Fig. 1** und **2** dargestellten Geräteträgers;
- **Fig. 9:**: einen ersten Kanaladapter des in **Fig. 1** dargestellten Geräteträgers;
- **Fig. 10:**: einen zweiten Kanaladapter des in **Fig. 2** dargestellten Geräteträgers;
- **Fig. 11:**: die in **Fig. 3** dargestellte Trägerbasis in einer Montagekonfiguration;
- **Fig. 12:**: die in **Fig. 11** dargestellte Trägerbasis in Verbindung mit dem in **Fig. 4** dargestellten Montagerahmen;
- **Fig. 13:**: eine seitliche Unteransicht des in **Fig. 4** dargestellten Montagerahmens;
- **Fig. 14:**: eine Seitenansicht der in **Fig. 11** dargestellten Trägerbasis;
- **Fig. 15:**: die Ausbildung einer aus dem Trägergehäuse und dem Kanaladapter ausgebildeten Montageeinheit;
- **Fig. 16:**: die Anordnung der gemäß **Fig. 15** ausgebildeten Montageeinheit auf der mit dem Montagerahmen verbundenen Trägerbasis;
- **Fig. 17:**: die Anordnung der in **Fig. 8** dargestellten Rahmenblende auf dem Trägergehäuse;
- **Fig. 18:**: einen Geräteträger gemäß einer weiteren Ausführungsform;
- **Fig. 19:**: eine Trägerbasis des in **Fig. 18** dargestellten Geräteträgers;
- **Fig. 20:**: ein in einer Längsseite und einer Querseite mit einer Ausnehmung versehenes Trägergehäuse des in **Fig. 18** dargestellten Geräteträgers;
- **Fig. 21:**: einen Gehäusewandeinsatz zur Anordnung in einer Ausnehmung des in **Fig. 20** dargestellten Trägergehäuses;
- **Fig. 22:**: einen ersten Kanaladapter des in **Fig. 18** dargestellten Geräteträgers;
- **Fig. 23:**: einen zweiten Kanaladapter des in **Fig. 18** dargestellten Geräteträgers;
- **Fig. 24:**: die in **Fig. 19** dargestellte Trägerbasis in Montagekonfiguration;
- **Fig. 25:**: die Ausbildung einer Montageeinheit aus dem in **Fig. 20** dargestellten Trägergehäuse und dem in **Fig. 22** dargestellten Kanaladapter;
- **Fig. 26:**: die Anordnung der in **Fig. 25** dargestellten Montageeinheit auf der in **Fig. 24** dargestellten Trägerbasis;
- **Fig. 27:**: die Anordnung einer Elektroinstallationsgerätekombination in der im Trägergehäuse aufgenommenen Trägerbasis.

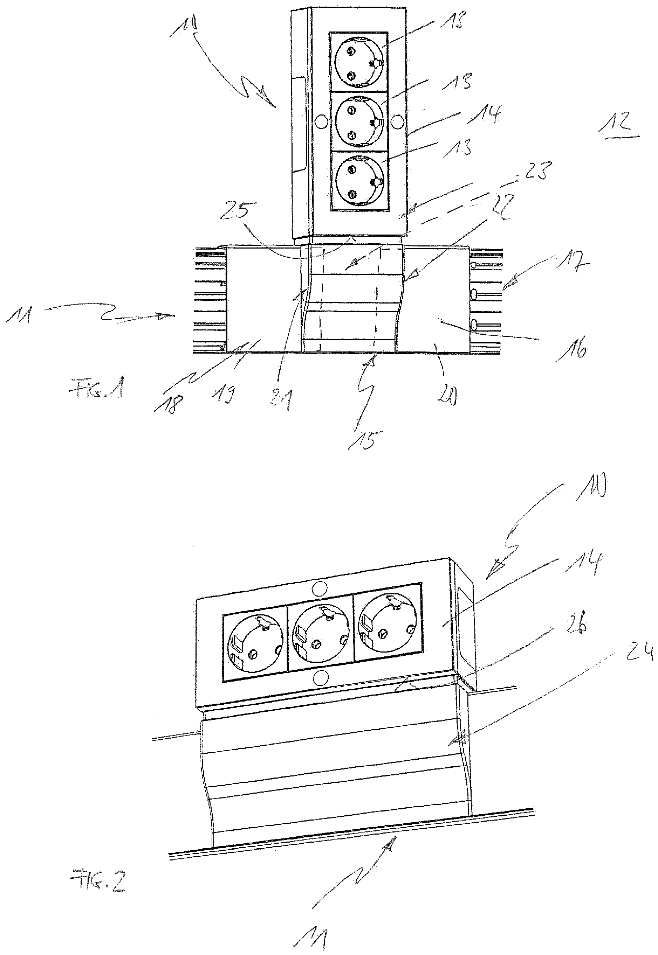

**Fig. 1** zeigt einen Geräteträger 10 in Vertikalausrichtung, in der der Geräteträger 10 neben einem Leitungsführungskanal 11 an einer Gebäudeinnenwand 12 montiert ist. Der Geräteträger 10 ist im vorliegenden Fall zur Aufnahme von drei in einer Reihenanordnung angeordneten und vorliegend als Steckdosen ausgebildeten Elektroinstallationsgeräten 13 an der Gebäudeinnenwand 12 montiert. Der Geräteträger 10 weist ein Trägergehäuse 14 sowie einen mit dem Trägergehäuse 14 verbundenen Kanaladapter 15 auf, der eine Frontseite 16 einer auf einer Kanalbasis 17 montierten Kanalabdeckung 18 überdeckt. Im vorliegenden Fall weist die Kanalabdeckung 18 zwei jeweils seitlich benachbart dem Kanaladapter 15 angeordnete Abdeckelemente 19, 20 auf, die jeweils teilweise von einem Adapterrand 21, 22 überdeckt werden und zur Ausbildung einer Kabeldurchführung 23 dienen, aus der nicht näher dargestellte, in der Kanalbasis 17 verlaufende Leitungen aus der Kanalbasis 17 in den Geräteträger 10 hinein geführt werden.

**Fig. 2** zeigt den Geräteträger 10 in Horizontalausrichtung, in der der Geräteträger 10 am Leitungsführungskanal 11 angeordnet ist. In der in **Fig. 2** dargestellten Horizontalausrichtung ist das Trägergehäuse 14 des Geräteträgers 10 mit einem Kanaladapter 24 verbunden, der abweichend von dem Kanaladapter 15, der an einer Querseite 25 des Trägergehäuses 14 angeordnet ist, an einer Längsseite 26 des Trägergehäuses 14 angeordnet ist.

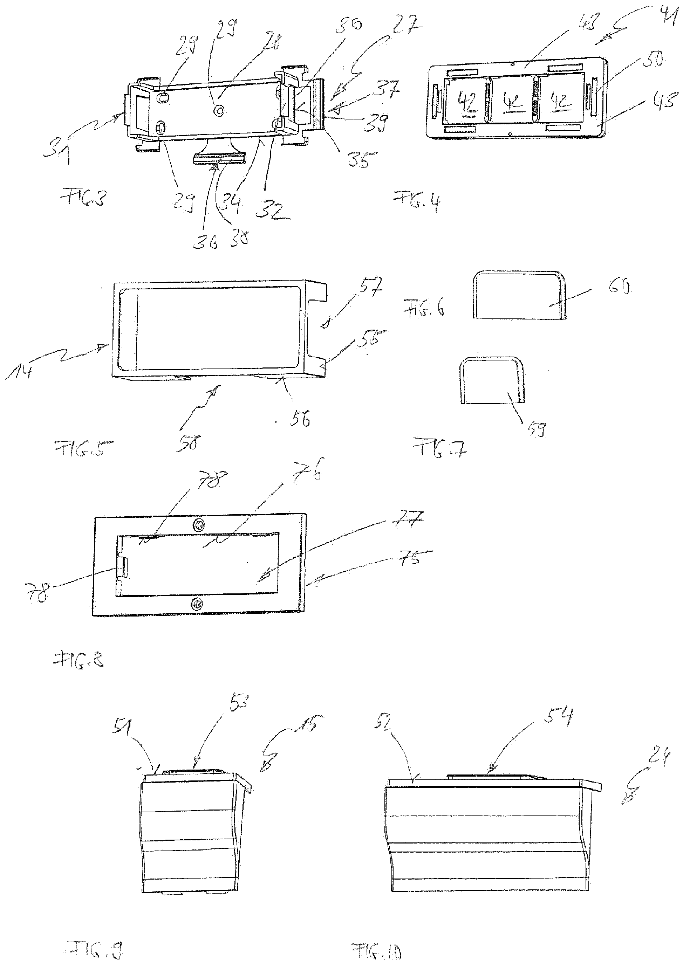

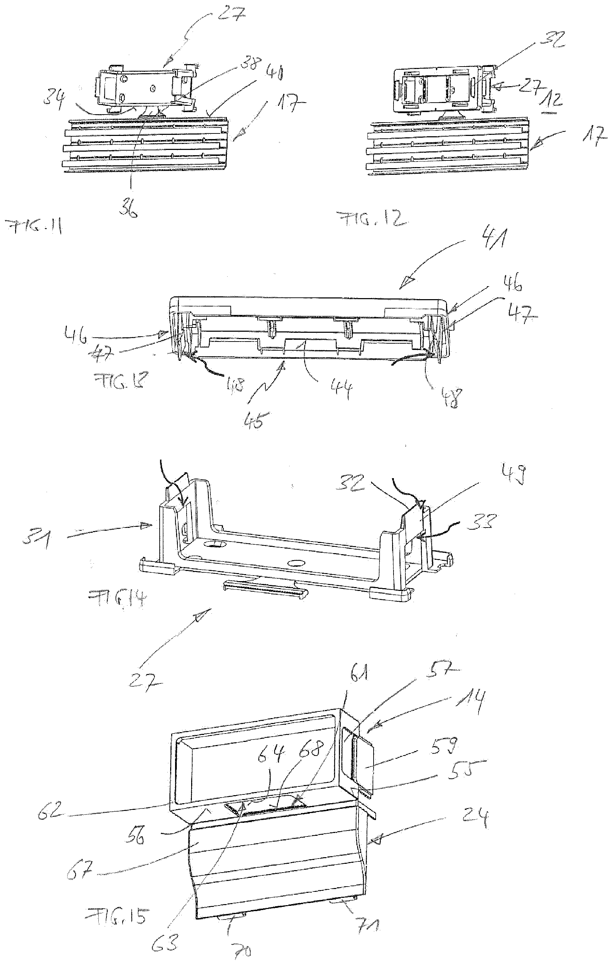

**Fig. 3** zeigt eine Trägerbasis 27, die zur Wandinstallation bestimmt ist und dazu in einer Montagerückwand 28 Befestigungslöcher 29 zur Anordnung von nicht näher dargestellten Befestigungsschrauben aufweist. An axialen Enden der Montagerückwand 28 sind mit einer Leitungsdurchführung 30 versehene Anschlusswangen 31 vorgesehen, die, wie insbesondere auch in **Fig. 14** dargestellt, Passstege 32 aufweisen, welche an ihrem unteren Rand Rastkanten 33 ausbilden.

Wie **Fig. 3** weiter zeigt, ist die Trägerbasis 27 an einer Längsseite 34 und an einer Querseite 35 jeweils mit einer Positionierungshilfe 36 bzw. 37 versehen, die übereinstimmend einen Parallelanschlag 38, 39 aufweisen, der, wie am Beispiel des an der Längsseite 34 ausgebildeten Parallelanschlags 38 in **Fig. 11** dargestellt, zur Anlage gegen eine Längskante 40 der Kanalbasis 17 dient, um so eine zur Kanalbasis 17 parallele Ausrichtung der Trägerbasis 27 für die Wandmontage der Trägerbasis 27 zu ermöglichen. Wie ein Vergleich der **Fig. 3** **und** **11** verdeutlicht, kann die neben der Positionierungshilfe 36 an der Querseite 35 der Trägerbasis 27 ausgebildete weitere Positionierungshilfe 37 in dem in **Fig. 11** dargestellten Fall der Anordnung der Trägerbasis 27 in Horizontalausrichtung entfernt werden. Hierzu sind die Positionierungshilfen 36, 37 mittels nicht näher dargestellter Sollbrucheinrichtungen mit der Trägerbasis 27 verbunden.

**Fig. 12** zeigt einen in **Fig. 4** in Einzeldarstellung dargestellten Montagerahmen 41 nach Verbindung mit der zuvor an der Gebäudeinnenwand 12 montierten Trägerbasis 27.

Der Montagerahmen 41 ist in seiner in **Fig. 4** dargestellten Ausführungsform für eine Reihenanordnung von drei, hier im Einzelnen nicht dargestellten, beispielsweise als Steckdosen ausgebildeten Elektroinstallationsgeräten 13 **(****Fig. 2****)** vorgesehen und weist zu deren Aufnahme drei Aufnahmeöffnungen 42 auf, die ein Einführen der Elektroinstallationsgeräte 13 in eine Frontseite 43 des Montagerahmens 41 ermöglichen, derart, dass die Elektroinstallationsgeräte 13 mit an ihnen vorgesehenen Rasteinrichtungen Rastkanten 44 **(Fig. 13)** des Montagerahmens 41 hintergreifen und über einer derart hergestellte Eingriffsverbindung in definierter Position mit dem Montagerahmen 41 verbunden sind.

Der Montagerahmen 41 weist, wie insbesondere auch in **Fig. 13** dargestellt, an seiner Unterseite 45 jeweils an einer Querseite 46 des Montagerahmens 41 ausgebildete Rastlaschen 47 auf, die mit Rastfortsätzen 48 versehen sind, welche bei einem Zusammenfügen des Montagerahmens 41 und der Trägerbasis 27, derart, dass der Montagerahmen 41 mit seiner gegen die Trägerbasis 27 gerichteten Unterseite 45 und in deckungsgleicher Anordnung mit der Trägerbasis 27 auf die Anschlusswangen 31 der Trägerbasis 27 aufgeschoben wird, zunächst an Führungsflächen 49 **(****Fig. 14****)** der Anschlusswangen 31 entlanggleiten, um schließlich hinter den Rastkanten 33 der Passstege 32 zu verrasten. In dieser verrasteten Position durchdringen, wie in **Fig. 12** dargestellt, die Passstege 32 in der Frontseite 43 des Montagerahmens 41 ausgebildete Passschlitze 50 **(****Fig. 4****),** sodass eine eindeutige Relativpositionierung des Montagerahmens 41 an der Trägerbasis 27 definiert ist.

Bei der Montage des Montagerahmens 41 an der Trägerbasis 27 sind die während der Montage des Montagerahmens 41 mit dem Montagerahmen 41 verbundenen Elektroinstallationsgeräte 13 bereits mit den entsprechenden in dem Leitungsführungskanal 11 bzw. der Kanalbasis 17 des Leitungsführungskanals 11 aufgenommenen elektrischen Anschlussleitungen verbunden, sodass nach erfolgter Montage des Montagerahmens 41 bereits ein Betrieb der Elektroinstallationsgeräte 13 möglich ist.

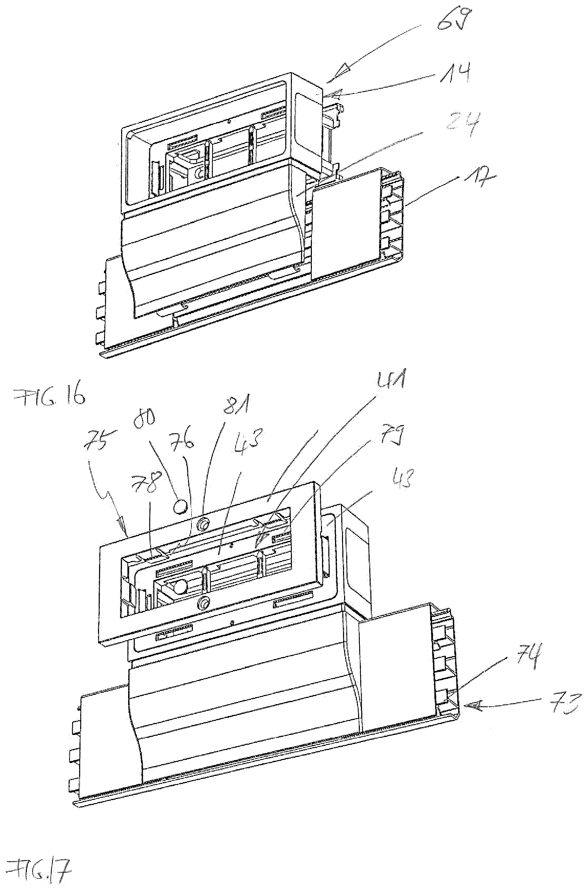

Vor der nachfolgenden, in **Fig. 16** dargestellten Montage des Trägergehäuses 14 erfolgt die Kombination des in **Fig. 5** in Einzeldarstellung dargestellten Trägergehäuses 14 mit dem jeweils für die beabsichtigte Horizontal- oder Vertikalausrichtung des Trägergehäuses 14 passenden Kanaladapter 15 oder 24. Zur Kombination der Kanaladapter 15 und 24, die in den **Fig. 9** und **10** in Einzeldarstellung gezeigt sind, weisen diese jeweils eine an einer Anschlussseite 51 bzw. 52 ausgebildete Anschlusseinrichtung 53 bzw. 54 auf, die zur Verbindung mit einer an einer Querseite 55 oder Längsseite 56 ausgebildeten Ausnehmung 57 bzw. 58 dient. Zum Verschließen der jeweils nicht benötigten Ausnehmung 57 und 58 sind entsprechend den Ausnehmungen 57, 58 dimensionierte Gehäusewandeinsätze 59, 60 vorgesehen, sodass, wie beispielsweise in der **Fig. 1** dargestellt, bei einem in Vertikalausrichtung installierten Trägergehäuse 14 die Längsseite 56 des Trägergehäuses 14 nach Einfügung des Gehäusewandeinsatzes 60 als geschlossene Gehäusewand ausgebildet ist.

In der Darstellung gemäß **Fig. 15** erfolgt eine Kombination des Trägergehäuses 14 an seiner Längsseite 56 mit dem Kanaladapter 24 und ein Einschub des Gehäusewandeinsatzes 59 in die an der Querseite 55 des Trägergehäuses 14 ausgebildete Ausnehmung 57, sodass das Trägergehäuse 14 zusammen mit dem Kanaladapter 24 eine in **Fig. 16** dargestellte Montageeinheit 69 ausbildet, die auf die mit dem Montagerahmen 41 versehene Trägerbasis 27 aufsetzbar ist.

**Fig. 15** zeigt, dass entsprechend dem Einschub des Gehäusewandeinsatzes 59 in die an der Querseite 55 des Trägergehäuses 14 ausgebildete Ausnehmung 57 eine Verbindung zwischen dem Trägergehäuse 14 und dem Kanaladapter 24 dadurch erfolgt, dass die an der Anschlussseite 52 des Kanaladapters 24 ausgebildete Anschlusseinrichtung 54, die einen sich parallel zur Anschlussseite 52 des Kanaladapters 24 erstreckenden U-förmigen Verbindungssteg 61 aufweist, mit dem Verbindungssteg 61 in eine entsprechend dem Verbindungssteg 61 U-förmig ausgebildete sich parallel zur Längsseite 56 des Trägergehäuses 14 erstreckende Aufnahmenut 63 eingeschoben wird. Dabei bilden ein sich parallel zur Frontseite 62 des Trägergehäuses 14 erstreckender Nutabschnitt 64 sowie ein sich parallel zu einer Frontseite 67 des Kanaladapters 24 erstreckender Stegabschnitt 68 einen axialen Anschlag aus, derart, dass die Frontseiten 62 und 67 im Verbindungsbereich zwischen dem Trägergehäuse 14 und dem Kanaladapter 24 bündig sind.

Die so ausgebildete Montageeinheit 69 wird, wie aus **Fig. 17** hervorgeht, bis zum Anschlag des Kanaladapters 24 gegen die Kanalabdeckung 18 auf die Trägerbasis 27 aufgeschoben. Dabei verrasten am unteren Rand des Kanaladapters 24 ausgebildete Rastlaschen 70, 71 **(****Fig. 15****)** mit einem an einem unteren Längsrand 73 der Kanalbasis 17 ausgebildeten Raststeg 74.

Zur Fixierung des Trägergehäuses 14 an dem Montagerahmen 41 wird auf die Frontseite 43 des Montagerahmens 41, wie in **Fig. 17** dargestellt, eine Rahmenblende 75 aufgesetzt, die, wie insbesondere auch in **Fig. 8** dargestellt, mit am Rand 76 einer Rahmenöffnung 77 angeordneten Rastlaschen 78 in Rastöffnungen 79 des Montagerahmens 41 eingreift, sodass zwischen der Rahmenblende 75 und dem Montagerahmen 41 eine Rastverbindung ausgebildet ist.

Zusätzlich kann, wie in **Fig. 17** dargestellt, noch eine Schraubverbindung der Rahmenblende 75 mit dem Montagerahmen 41 vorgesehen werden, derart, dass nicht näher dargestellte Verbindungsschrauben, deren Schraubenköpfe durch Abdeckscheiben 80 abgedeckt werden, in Befestigungsöffnungen 81 der Rahmenblende 75 eingesetzt werden.

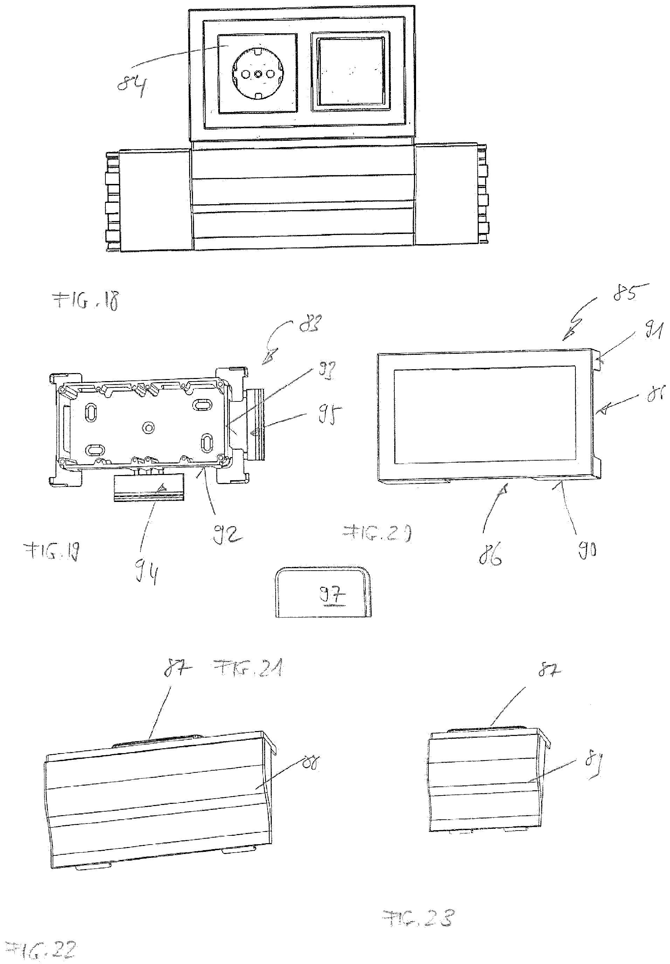

In den **Fig. 18** bis **27** ist in einer weiteren Ausführungsform ein Geräteträger 82 dargestellt, der sich im Wesentlichen von dem unter Bezugnahme auf die **Fig. 1** bis **17** erläuterten Geräteträger 10 dadurch unterscheidet, dass anstelle der Trägerbasis 27 des Geräteträgers 10 im Falle des Geräteträgers 82 eine in **Fig. 19** dargestellte Trägerbasis 83 zum Einsatz kommt, die so ausgebildet ist, dass in ihrer Dimensionierung abweichend von den in dem Geräteträger 10 aufgenommenen Elektroinstallationsgeräten 13 ausgebildete Elektroinstallationsgeräte 84 unmittelbar, also ohne die vorhergehende Kombination der Elektroinstallationsgeräte 84 mit einem Montagerahmen 41, mit der Trägerbasis 83 verbunden werden.

Ein Montagerahmen ist also im Falle des Geräteträgers 82 nicht erforderlich.

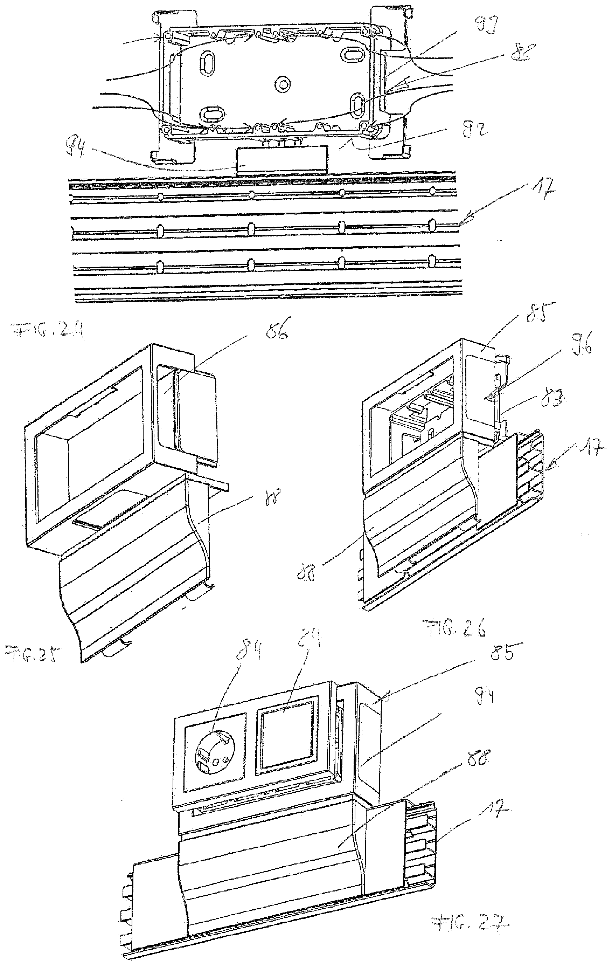

Der Geräteträger 82, der im Fall des dargestellten Ausführungsbeispiels zur Aufnahme von zwei in Reihenanordnung angeordneten Elektroinstallationsgeräten 84 dient, weist ansonsten in Übereinstimmung mit dem Geräteträger 10 ein in **Fig. 20** dargestelltes Trägergehäuse 85 auf, das bei dem dargestellten Ausführungsbeispiel mit in ihrer Dimensionierung übereinstimmend ausgebildeten Ausnehmungen 86 an einer Querseite 94 und einer Längsseite 95 versehen ist, sodass im vorliegenden Fall auch nur ein Gehäusewandeinsatz 97 vorgesehen ist, der wechselweise, je nachdem, ob eine in **Fig. 27** dargestellte Installation mit Horizontalausrichtung des Trägergehäuses 85 oder eine davon abweichende, hier nicht dargestellte Installation des Trägergehäuses 85 in Vertikalausrichtung erfolgen soll, in die jeweils geeignete Ausnehmung 86 eingesetzt wird.

Die **Fig. 22** und **23** zeigen unterschiedlich dimensionierte, mit übereinstimmend ausgebildeter Anschlusseinrichtung 87 versehene Kanaladapter 88 und 89, wobei der Kanaladapter 88, wie in den **Fig. 25** bis **27** dargestellt, zur Verbindung mit der Längsseite 90 des Trägergehäuses 85 dient, und der Kanaladapter 89 zum Anschluss an eine Querseite 91 des Trägergehäuses 85 bestimmt ist.

Wie bereits Bezug nehmend auf die Trägerbasis 27 des Geräteträgers 10 erläutert, ist auch die Trägerbasis 83 des Geräteträgers 82 sowohl an einer Längsseite 92 als auch an einer Querseite 93 mit jeweils einer Positionierungshilfe 94, 95 versehen, um die in **Fig. 24** dargestellte Montage der Trägerbasis 83 in Parallelausrichtung zur Kanalbasis 17 zu ermöglichen.

Wie **Fig. 27** zeigt, erfolgt bei Verwendung des Geräteträgers 82 die Kombination der Elektroinstallationsgeräte 84 mit der Trägerbasis 83 erst nachdem das mit dem Kanaladapter 88 zur Ausbildung einer Montageeinheit 94 verbundene Trägergehäuse 85 auf die Trägerbasis 83 aufgesetzt und mit der Kanalbasis 17 verbunden ist. Dabei bildet die zwischen den Elektroinstallationsgeräten 84 und der Trägerbasis 83 ausgeführte Verbindung gleichzeitig die Sicherung des Trägergehäuses 85 in seiner Anordnung an der Trägerbasis 83 aus.

## Patentansprüche

1. Geräteträger (10, 82) für die Montage von Elektroinstallationsgeräten (13, 84) neben insbesondere als Sockelleistenkanal ausgeführten Leitungsführungskanälen (11) mit einer Trägerbasis (27, 83) zur Aufnahme zumindest eines Elektroinstallationsgerätes, einem Trägergehäuse (14, 85) zur Aufnahme der Trägerbasis und einem Kanaladapter (15, 24, 88, 89) zum Anschluss des Trägergehäuses an den Leitungsführungskanal, wobei der Kanaladapter unabhängig vom Trägergehäuse ausgebildet ist, und wobei das Trägergehäuse an einer Anschlussseite zum Anschluss an den Kanaladapter in einer Gehäusewand eine Ausnehmung (57, 58, 86) zur Aufnahme eines an einer Anschlussseite (51, 52) des Kanaladapters ausgebildeten Anschlusseinrichtung (53, 54, 87) aufweist, wobei sowohl eine Längsseite (56, 90) als auch eine Querseite (55, 91) des Trägergehäuses als Anschlussseite ausgebildet sind, die jeweils einen in der Ausnehmung der Gehäusewand angeordneten Gehäusewandeinsatz (59, 60, 97) aufweisen, **dadurch gekennzeichnet,**
**dass** die an der Anschlussseite des Trägergehäuses ausgebildete Ausnehmung mit dem gegen die an der Anschlussseite des Kanaladapters ausgebildete Anschlusseinrichtung austauschbaren Gehäusewandeinsatz versehen ist, und dass sowohl eine Längsseite (34, 92) als auch eine Querseite (35, 93) der Trägerbasis mit einer über eine Sollbrucheinrichtung mit der Längsseite und der Querseite abtrennbar verbundenen Positionierungshilfe (36, 37, 94, 95) versehen sind, die in definiertem Abstand von der Längsseite und der Querseite einen Parallelanschlag zur Anlage gegen den Leitungsführungskanal aufweist.

2. Geräteträger nach Anspruch 1,
**dadurch gekennzeichnet,**
**dass** der Kanaladapter (15, 24, 88, 89) eine Abdeckung einer zur Wandmontage ausgebildeten Kanalbasis (17) des Leitungsführungskanals (11) bildet.

3. Geräteträger nach Anspruch 1 oder 2,
**dadurch gekennzeichnet,**
**dass** der Kanaladapter (15, 24, 88, 89) austauschbar mit dem Trägergehäuse (14, 85) verbunden ist.

4. Geräteträger nach Anspruch 3,
**dadurch gekennzeichnet,**
**dass** der Kanaladapter (15, 24, 88, 89) mittels einer Steckverbindung mit dem Trägergehäuse (14, 85) verbunden ist.

5. Geräteträger nach Anspruch 4,
**dadurch gekennzeichnet,**
**dass** die Steckverbindung als Eingriffsverbindung ausgebildet ist, derart, dass ein an der Anschlusseinrichtung (53, 54, 87) ausgebildeter Verbindungssteg (61) in eine am Öffnungsrand der Ausnehmung (57, 58, 86) ausgebildete Aufnahmenut (63) eingreift.

6. Geräteträger nach Anspruch 5,
**dadurch gekennzeichnet,**
**dass** der Verbindungssteg (61) und die Aufnahmenut (63) eine U-förmige Erstreckung aufweisen, derart, dass ein benachbart einer Frontseite (43) des Trägergehäuses bzw. des Kanaladapters (67) angeordneter und zur Frontseite paralleler Stegabschnitt (68) und Nutabschnitt (64) zusammen einen axialen Anschlag ausbilden.

7. Geräteträger nach einem der vorangehenden Ansprüche,
**dadurch gekennzeichnet,**
**dass** die Trägerbasis (27) eine Anschlusseinrichtung zum Anschluss eines Montagerahmens (41) aufweist, derart, dass zur Aufnahme des Elektroinstallationsgerätes (13) in der Trägerbasis der Montagerahmen zusammen mit dem Elektroinstallationsgerät als Montageeinheit mit der Anschlusseinrichtung verbindbar ist.

8. Geräteträger nach Anspruch 7,
**dadurch gekennzeichnet,**
**dass** der Montagerahmen (41) mit einer Rahmenblende (75) versehen ist, derart, dass ein Öffnungsrand (76) des Trägergehäuses (14) zwischen dem Montagerahmen und der Rahmenblende aufgenommen ist.

## Claims

1. Device carrier (10, 82) for mounting electrical installation devices (13, 84) next to cable ducts (11) which are in particular realized as a skirting-board duct, said device carrier (10, 82) comprising a carrier base (27, 83) for receiving at least one electrical installation device, a carrier housing (14, 85) for receiving the carrier base and a duct adapter (15, 24, 88, 89) for connecting the carrier housing to the cable duct, the duct adapter being realized independently of the carrier housing, and the carrier housing having at a connection side for the connection to the duct adapter a clearance (57, 58, 86) in a housing wall for receiving a connection element (53, 54, 87) realized at a connection side (51, 52) of the duct adapter, both a longitudinal side (56, 90) and a transverse side (55, 91) of the carrier housing being realized as a connection side, the longitudinal side (56, 90) and the transverse side (55, 91) each having a housing wall insert (59, 60, 97) disposed in the clearance of the housing wall,
**characterized in that**
the clearance realized at the connection side of the carrier housing being provided with the housing wall insert which is interchangeable with the connection element realized at the connection side of the duct adapter, and **in that** both a longitudinal side (34, 92) and a transverse side (35, 93) of the carrier base are provided with a positioning aid (36, 37, 94, 95) which is separably connected to the longitudinal side and the transverse side via a predetermined breaking element, said positioning aid (36, 37, 94, 95) having a parallel stop for coming into contact with the cable duct at a defined distance from the longitudinal side and the transverse side.

2. Device carrier according to claim 1,
**characterized in that**
the duct adapter (15, 24, 88, 89) realizes a cover of a duct base (17) of the cable duct (11), said duct base (17) being realized for the wall mounting.

3. Device carrier according to claim 1 or 2,
**characterized in that**
the duct adapter (15, 24, 88, 89) is exchangeably connected to the carrier housing (14, 85).

4. Device carrier according to claim 3,
**characterized in that**
the duct adapter (15, 24, 88, 89) is connected to the carrier housing (14, 85) by means of an insertion connection.

5. Device carrier according to claim 4,
**characterized in that**
the insertion connection is realized as an engagement connection in such a manner that a connecting web (61) realized at the connection element (53, 54, 87) engages into a receiving groove (63) realized at the opening edge of the clearance (57, 58, 86).

6. Device carrier according to claim 5,
**characterized in that**
the connection web (61) and the receiving groove (63) have a U-shaped dimension in such a manner that a web section (68) and a groove section (64) which are disposed adjacently to a front side (43) of the carrier housing and the duct adapter (67), respectively, and which are parallel to the front side together realize an axial stop.

7. Device carrier according to any one of the preceding claims,
**characterized in that**
the carrier base (27) has a connection element for the connection of a mounting frame (41) in such a manner that, in order to receive the electrical installation device (13) in the carrier base, the mounting frame together with the electrical installation device is connectable to the connection element as a mounting unit.

8. Device carrier according to claim 7,
**characterized in that**
the mounting frame (41) is provided with a frame cover (75) in such a manner that an opening edge (76) of the carrier housing (14) is received between the mounting frame and the frame cover.

## Revendications

1. Support d'appareillage (10, 82) pour le montage d'appareils (13, 84) d'installation électrique á côté de conduits de câbles (11) qui sont notamment réalisés comme conduit de plinthe, ledit support d'appareillage (10, 82) comprenant une base de support (27, 83) pour recevoir au moins un appareil d'installation électrique, un boîtier de support (14, 85) pour recevoir la base de support et un adaptateur de conduit (15, 24, 88, 89) pour relier le boîtier de support au conduit de câbles, l'adaptateur de câbles étant réalisé indépendamment du boîtier de support, et le boîtier de support ayant à un côté de liaison pour la liaison à l'adaptateur de conduit dans une paroi de boîtier une échancrure (57, 58, 86) pour recevoir un moyen de liaison (53, 54, 87) réalisé à un côté de liaison (51, 52) de l'adaptateur de conduit, autant un côté longitudinal (56, 90) qu'un côté transversal (55, 91) du boîtier de support étant réalisé comme côté de liaison, le côté longitudinal (56, 90) et le côté transversal (55, 91) chacun ayant un insert (59, 60, 97) de paroi de boîtier disposé dans l'échancrure de la paroi de boîtier,
**caractérisé en ce que**
l'échancrure réalisée au côté de liaison du boîtier de support étant pourvue de l'insert de paroi de boîtier qui est interchangeable avec le moyen de liaison réalisé au côté de liaison de l'adaptateur de conduit, et **en ce qu'**autant un côté longitudinal (34, 92) qu'un côté transversal (35, 93) de la base de support sont pourvus d'une aide au positionnement (36, 37, 94, 95) qui est reliée de manière séparable au côté longitudinal et au côté transversal via un moyen destiné à la rupture, ladite aide au positionnement (36, 37, 94, 95) ayant une butée parallèle pour venir en contact avec le conduit de câbles à une distance définie du côté longitudinal et du côté transversal.

2. Support d'appareillage selon la revendication 1,
**caractérisé en ce que**
l'adaptateur de conduit (15, 24, 88, 89) réalise une couverture d'une base de conduit (17) du conduit de câbles (11), ladite base de conduit (17) étant réalisée pour le montage de paroi.

3. Support d'appareillage selon la revendication 1 ou 2,
**caractérisé en ce que**
l'adaptateur de conduit (15, 24, 88, 89) est relié de manière échangeable au boîtier de support (14, 85).

4. Support d'appareillage selon la revendication 3,
**caractérisé en ce que**
l'adaptateur de conduit (15, 24, 88, 89) est relié au boîtier de support (14, 85) au moyen d'une liaison d'insertion.

5. Support d'appareillage selon la revendication 4,
**caractérisé en ce que**
la liaison d'insertion est réalisée comme liaison de mise en prise de manière qu'une âme de liaison (61) réalisée sur le moyen de liaison (53, 54, 87) vient en prise avec une rainure de réception (63) réalisée sur le bord d'ouverture de l'échancrure (57, 58, 86).

6. Support d'appareillage selon la revendication 5,
**caractérisé en ce que**
l'âme de liaison (61) et la rainure de réception (63) ont une dimension en forme de U de manière qu'une section d'âme (68) et une section de rainure (64) qui sont disposées respectivement de manière adjacente à une face avant (43) du boîtier de support et de l'adaptateur de conduit (67) et qui sont parallèles à la face avant réalisent conjointement une butée axiale.

7. Support d'appareillage selon l'une quelconque des revendications précédentes,
**caractérisé en ce que**
la base de support (27) a un moyen de liaison pour la liaison d'un cadre de montage (41) de manière que, pour recevoir l'appareil (13) d'installation électrique dans la base de support, le cadre de montage conjointement avec l'appareil d'installation électrique est capable d'être relié au moyen de liaison comme unité de montage.

8. Support d'appareillage selon la revendication 7,
**caractérisé en ce que**
le cadre de montage (41) est pourvu d'un couvercle de cadre (75) de manière qu'un bord d'ouverture (76) du boîtier de support (14) est reçu entre le cadre de montage et la couvercle de cadre.
